# FASCICULE DE BREVET EUROPEEN

(11) **EP 2 297 235 B1**
(45) Date de publication et mention de la délivrance du brevet: **08.11.2017**
(21) Numéro de dépôt: 09784506.9
(22) Date de dépôt: 10.07.2009
(51) Int. Cl.: C08K 3/22, C08K 9/02, C09D 5/03, C09D 5/36, C09D 7/12, C09D 177/02, A47L 15/50, C08L 77/00, C08K 3/34, C08K 3/08, C08J 3/12, C09D 177/00, B05D 1/24, B05D 5/06, C08L 77/02

(54) **COMPOSITION PULVERULENTE POUR LA FABRICATION D'OBJETS AYANT UN ASPECT METALLIQUE STABLE AU COURS DU TEMPS ET UNE RESISTANCE AU CRAYONNAGE AMELIOREE**
PULVERFÖRMIGE ZUSAMMENSETZUNG ZUR HERSTELLUNG VON ARTIKELN MIT DURCHWEG STABILEM METALLISCHEM ERSCHEINUNGSBILD UND ERHÖHTER ZEICHNERISCHER BESTÄNDIGKEIT
PULVERULENT COMPOSITION FOR THE MANUFACTURE OF ARTICLES HAVING A METALLIC APPEARANCE THAT IS STABLE OVER TIME AND AN IMPROVED RESISTANCE TO PENCILLING

(30) Priorité: 10.07.2008 FR 0854698
(43) Date de publication de la demande: 23.03.2011
(73) Titulaire: Arkema France, 92700 Colombes (FR)
(72) Inventeur: FILOU, Gregory, 27500 Manneville Sur Risle (FR); MATHIEU, Cyrille, 76100 Rouen (FR)
(86) Numéro de dépôt international: PCT/FR2009/051378
(87) Numéro de publication internationale: WO 2010/004227

(56) Documents cités:
- JP-A- 5 093 091
- JP-A- 2004 237 551
- US-A1- 2005 170 179
- US-A1- 2006 135 670

## Description

### Domaine de l'invention

L'invention concerne le domaine des compositions pulvérulentes en polymère utilisées pour la fabrication d'objets d'aspect métallique. Plus particulièrement, l'invention concerne la fabrication d'au moins une partie superficielle (c'est à dire au moins une surface externe) d'un objet par agglomération de poudre par fusion d'au moins une couche de poudre.

La présente invention concerne aussi bien la fabrication complète d'objets en trois dimensions que la fabrication d'au moins une partie superficielle de ces objets, dès l'instant que cette fabrication est effectuée par agglomération d'au moins une couche de poudre par fusion ou frittage provoqué par un rayonnement. Par rayonnement, on entend par exemple un faisceau laser (laser sintering), un rayonnement infra rouge ou un rayonnement UV ou toute source de rayonnement électromagnétique permettant de faire fondre de la poudre pour fabriquer un objet 3D ou au moins une partie superficielle de l'objet, telle qu'un revêtement de l'objet.

Par suite, la présente invention concerne notamment le domaine des revêtements en polymère destinés au recouvrement d'objets tels que les paniers métalliques de lave vaisselle. Ces revêtements forment un film sur l'objet, provenant de la fusion d'au moins une mince couche de poudre préalablement déposée sur l'objet.

Ces revêtements sont réalisés à l'échelle industrielle par poudrage électrostatique, par trempage en lit fluidisé, par trempage en lit triboélectrique (tel que décrit dans le brevet EP1119422) ou par tout autre procédé de revêtement bien connu de l'homme du métier.

### Technique antérieure

Le document US 5520956 (Merck) décrit l'utilisation de pigments à effets brillants dans des revêtements obtenus par réticulation (thermodurs).

Le document US 20070032574 (Eckart) décrit l'utilisation de pigments nacrés, dont la surface est modifiée par un composé phosphoré organique, dans des poudres de revêtement. Les poudre de revêtement utilisées sont les polyesters, les polyuréthanes, polyacrylates, résines epoxy.

Ce type de revêtements polymères présente plusieurs inconvénients : une résistance à l'abrasion insuffisante, une résistance à la corrosion insuffisante, et une mise en oeuvre compliquée qui requiert une réticulation dans un four dans des conditions précises de temps et de température.

On peut citer aussi les revêtements obtenus à partir de poudres thermoplastique de polyoéfines (base polyethylène ou polypropylène par exemple), comprenant une fonction polaire par exemple à partir d'acide (meth)acrylique, comme décrits dans le document GB2097809 de la société PLASCOAT. Cependant, ces revêtements ont une résistance à l'abrasion et une tenue à la corrosion insuffisantes, et ils sont difficiles à mettre en oeuvre sur des articles en fils métallique tels que des paniers de lave-vaisselle.

A l'inverse, les revêtements en polyamide possèdent une bonne résistance à l'abrasion, une bonne résistance à la corrosion et ils sont très faciles à mettre en oeuvre. Les brevets EP0367653, EP0706544, EP0821039, EP1453906, EP1541650 et la demande de brevet WO2008029070 déposées par la demanderesse décrivent ces propriétés avantageuses obtenues avec les revêtements polyamide.

Les défauts les plus fréquemment rencontrés dans les revêtements de l'art antérieur sont la piqûre, le cloquage, les yeux de poisson, le dégarnissage d'arêtes et la peau d'orange.

Une piqûre correspond à la formation de trous à la surface d'un revêtement provoqué par un défaut d'étalement du film de polymère lorsqu'il filmifie et durcit. Un cloquage correspond à la formation de cloques à la surface du film polymère. Les yeux de poisson sont des imperfections caractérisées par la disparition de revêtement en certains endroits de la surface du film. Les yeux de poisson se forment généralement lorsque le revêtement ne peut mouiller suffisamment la surface ou lorsque les particules de polymère coalescent mal entre elles. Le revêtement fondu forme un motif qui ressemble à des yeux de poisson. Le défaut de recouvrement des arêtes ou dégarnissage d'arêtes est lié à un mauvais recouvrement par le film polymère des extrémités d'articles. Un autre défaut d'aspect possible est la peau d'orange, c'est à dire l'ondulation excessive en surface du revêtement provoqué par un mauvais tendu du film polymère.

En plus d'être inesthétiques, ces défauts entraînent des problèmes de corrosion.

Il arrive également que certains revêtements et surfaces d'objets subissent une perte de teinte ou un jaunissement.

Or, une tendance forte du marché est la demande de revêtements combinant des propriétés anti-corrosion élevées et présentant un aspect esthétique amélioré, en particulier métallique, par exemple de couleur argentée, dorée ou irisée.

Afin d'améliorer l'aspect métallique des films de revêtement, des pigments métalliques sont utilisés, dans la formulation des revêtements.

La demande de brevet américain US 2006/0135670 décrit une composition thermoplastique polymère contenant des poudres métalliques, telles que des poudres d'acier inoxydable, pour l'obtention d'un revêtement d'aspect métallique. La quantité de poudre métallique utilisée dans cette demande est comprise dans la gamme allant de 1 à 10 parts, et de préférence dans la gamme allant de 1 à 3 parts pour 100 parts (en masse) de polymère thermoplastique.

Le document JP2004237551 décrit une composition ayant un aspect métallique de résine comprenant 80-99,5% de résine thermoplastique, 0,01-10% de poudre d'aluminium et 0,1-10% de pigment perlé. Le document JP05093091 décrit une composition utilisée dans le domaine automobile comprenant 0,5-50% de poudre d'aluminium, 0,5-50% de pigment perlé (mica) et 50-99% de résine thermoplastique. Les compositions dans ces 2 derniers documents sont destinées aux procédés de moulage par injection. Un revêtement par une composition telle que décrite dans ces deux documents présente un risque de crayonnage à sa surface.

Les problèmes typiquement observés sur les revêtements comprenant des pigments métalliques sont une perte de l'effet métallique, et un ternissement des revêtements, lors de leur contact prolongé avec l'eau. Certains métaux amphotères réagissent en milieu aqueux pour former des entités chimiques conduisant au ternissement des particules métalliques et donc du revêtement au cours de l'utilisation.

Pour réduire ce problème de ternissement, un moyen actuel consiste à utiliser une matrice imperméable à l'eau ou bien à utiliser des particules de métal (par exemple d'aluminium) enrobées, par exemple de silice. C'est notamment le cas de l'aluminium non pelliculant. Mais ces moyens ne fournissent pas l'aspect esthétique requis.

Un autre problème est celui de la fragilité du revêtement à l'hydrolyse. Comparativement à d'autres polymères thermoplastiques, le polyamide (PA), en particulier le polyamide 11 présente une meilleure résistance à l'hydrolyse et à la corrosion, à l'abrasion et sa mise en oeuvre est aisée (par exemple par trempage en lit fluidisé). Ce polyamide cristallin forme donc un matériau barrière particulièrement bien adapté pour le revêtement de paniers de lave-vaisselle.

Un autre problème est la séparation des pigments quand ils sont ajoutés par mélange à sec à la composition. Le problème de la séparation des pigments lors de l'application est principalement lié à la présence de forces électrostatiques qui tendent à séparer le polymère et le pigment. Pour éviter ce problème, il est nécessaire de choisir une granulométrie adaptée au pigment et un temps de mélange suffisant.

Le problème majeur des revêtements métalliques est leur tendance à se marquer suite au frottement de l'objet sur une surface quelconque. Ce peut être le cas notamment lorsque les pièces revêtues sont transportées.

Ce problème ne peut pas être résolu en utilisant un top-coat, car celui-ci serait altéré au cours de la refonte du polymère, au cours du procédé de revêtement.

La capacité d'un revêtement ou d'une surface d'un objet à se marquer par une rayure foncée, suite au frottement de l'objet, notamment métallique, est appelée « crayonnage » ou « metal marking ».

Bien que n'altérant par la matrice polymère en profondeur, les moindres petits frottements de la surface du revêtement de l'objet se traduisent par des lignes sombres inesthétiques, d'autant plus visibles à la surface du film, que celui-ci présente une teinte claire. Les marques s'accumulent sur le revêtement à chaque utilisation de l'objet, parfois même avant son utilisation, pendant la maintenance, la manipulation ou le transport de l'objet, de sorte que le revêtement perd rapidement son aspect esthétique d'origine.

La présente invention a donc pour but d'éviter les défauts de surface ou de revêtement précités et d'améliorer la résistance au crayonnage des revêtements polymères et/ou des parties superficielles polymères des objets d'aspect métallique.

La présente invention a également pour but de fournir une composition de fabrication (au moins partielle) d'un objet 3D, et/ou une composition de revêtement d'un objet, qui permet d'obtenir un film de revêtement ou au moins une partie superficielle de l'objet, dont l'aspect et la couleur métalliques restent homogènes, esthétiques et stables au cours du temps, c'est-à-dire ne changent pas même après plusieurs frottements et/ou utilisations de l'objet.

La présente invention a encore pour but de fournir un revêtement polymère de résistance au crayonnage améliorée ainsi qu'un procédé de recouvrement pour obtenir un tel revêtement.

La demanderesse a maintenant trouvé que l'utilisation de pigments à effets, tels que les nacres, en quantité efficace dans une composition de poudre, notamment de revêtement, pour la fabrication d'un objet, combinée à la limitation de la teneur en pigments métalliques, notamment en pigments aluminium, permettaient de prévenir et même d'éviter l'apparition du crayonnage à la surface de l'objet ou du film de revêtement, tout en apportant une amélioration de l'aspect esthétique, et notamment de l'aspect métallique, de l'objet ou de son revêtement.

### Résumé de l'invention

La présente invention a donc pour objet une composition pulvérulente pour la fabrication d'objets ayant un aspect métallique stable au cours du temps et une résistance au crayonnage améliorée, ladite composition comprenant :
- de 50 à 99,9% en masse d'au moins un polymère thermoplastique comprenant du polyamide,
- de 0,1 à 5% en masse d'au moins un pigment à effet optique,
au moins un pigment métallique pelliculant, dont la quantité ne dépasse pas 0,3% de la masse totale de la composition.
Par « objets ayant un aspect métallique stable au cours du temps », on entend des objets dont la surface métallique ne présente pas les inconvénients ni les défauts susmentionnés, en particulier le crayonnage ou « metal marking », et ces défauts ne surviennent pas non plus au cours du temps, même pendant l'utilisation de ces objets.
La composition pulvérulente selon l'invention peut bien entendu comprendre en outre jusqu'à 49,9% d'un ou plusieurs autre(s) composant(s) choisi(s) parmi des polymères autres que thermoplastiques, des charges, des additifs, des pigments classiques monochromatiques ou tout autre matériau envisageable dans une telle composition pulvérulente.

Ledit au moins un polymère de base comprend du polyamide, choisi parmi les polyamides : PA 11, PA 12, PA 6.10, PA 6.12, PA 6.14, PA 6.18, PA 10.10, PA 10.12, les copolyamides, et leurs mélanges.

Avantageusement, ledit au moins un pigment à effet est choisi parmi les pigments diffractants, les pigments interférentiels, les pigments réfléchissants et leurs mélanges.

Avantageusement, les pigments diffractants sont choisis parmi :
- les pigments monocouche comprenant un matériau réfléchissant choisi parmi les métaux et leurs alliages,
- les pigments présentant une structure multicouche comportant une couche d'un matériau réfléchissant choisi parmi les métaux et leurs alliages et aussi parmi les matériaux réfléchissants non métalliques, recouverte au moins d'un côté d'une couche d'un matériau diélectrique.
- les pigments composés d'un matériau diélectrique ou céramique préformé tel qu'un minéral en lamelle naturelle ou des lamelles synthétiques, et leurs mélanges.

Avantageusement, lesdits pigments interférentiels sont choisis parmi les nacres, les particules réfléchissantes interférentielles, les pigments goniochromatiques et leurs mélanges.

Avantageusement, lesdits pigments goniochromatiques sont choisis parmi les structures multicouches interférentielles et les agents de coloration à cristaux liquides.

Avantageusement, lesdites nacres sont choisies parmi les pigments nacrés tels que le mica titane recouvert avec un oxyde de fer, le mica recouvert d'oxychlorure de bismuth, le mica titane recouvert avec de l'oxyde de chrome, le mica titane recouvert avec un colorant organique, les pigments nacrés à base d'oxychlorure de bismuth, les particules de mica à la surface desquelles sont superposées au moins deux couches successives d'oxydes métalliques et/ ou de matières colorantes organiques et leurs mélanges.

Avantageusement, lesdites particules réfléchissantes interférentielles sont choisies parmi les particules à substrat synthétique enrobé au moins partiellement d'au moins une couche d'au moins un oxyde métallique. Avantageusement, lesdits pigments réfléchissants sont choisis parmi :
- les oxydes métalliques, notamment les oxydes de titane ou de fer obtenus par synthèse,
- les structures multicouches comprenant un substrat naturel ou synthétique, au moins partiellement enrobé par au moins une couche d'un matériau réfléchissant notamment d'au moins un métal ou matériau métallique.

Avantageusement, ledit au moins un pigment métallique pelliculant est choisi parmi : l'aluminium, le cuivre, les alliages du cuivre ou de l'aluminium, et leurs mélanges.

Avantageusement, ledit au moins un pigment métallique pelliculant est de l'aluminium pelliculant.

Avantageusement, ledit au moins un polymère est du polyamide 11, ledit au moins un pigment à effet comprend de 0,1 à 1 % en masse de nacres sur la masse totale de la composition, ledit au moins un pigment métallique comprend moins de 0,3% en masse d'Aluminium, de préférence moins de 0,2% en masse d'Aluminium sur la masse totale de la composition.

Avantageusement, ladite composition comprend en outre au moins un additif et/ ou au moins une charge et/ ou au moins un pigment monochromatique.

Avantageusement, ledit au moins un additif est choisi parmi les agents antioxydants, les stabilisants thermiques, les agents anticorrosion, les agents d'amélioration de la fluidité, de la coulabilité, les agents filmogènes, les auxiliaires de filmification, les gommes, les polymères semi-cristallins, les conservateurs, les agents protecteurs contre les UV, et leurs mélanges.

Avantageusement, ladite au moins une charge est choisie parmi les oxydes, silices, quartz, silice amorphe, diatomées ; les silicates, talc, mica, kaolin, bentonite, silicate de calcium, le siloxysilicate de triméthyle ; les carbonates, carbonate de calcium, carbonate de magnesium, hydrogénocarbonate de magnésium, dolomie ; les sulfates ; l'hydroxyapatite, le nitrure de bore, les microsphères de silice creuses ; les microcapsules de verre ou de céramique ; les composites de silice et de dioxyde de titane, et leurs mélanges.

L'invention a également pour objet un revêtement d'aspect métallique stable au cours du temps et résistant au crayonnage, ledit revêtement étant issu de la fusion d'au moins une couche de poudre de composition telle que définie précédemment.

L'invention a également pour objet un procédé de fabrication d'au moins une partie superficielle d'un objet par agglomération de poudre par fusion, ladite poudre comprenant une composition selon l'invention telle que définie précédemment.

Avantageusement, l'agglomération de poudre par fusion est provoquée par un rayonnement électromagnétique, tel qu'un faisceau laser, un rayonnement infra rouge ou un rayonnement UV.

Avantageusement, ladite partie superficielle de l'objet comprend au moins un revêtement formé par agglomération de poudre de composition selon l'invention, ledit revêtement ayant un aspect métallique stable au cours du temps et étant résistant au crayonnage, ledit procédé comprenant au moins les étapes suivantes:
- mélange des composants de ladite composition, de préférence à une vitesse de rotation comprise dans la gamme allant de 500 à 3000 tr.min⁻¹
- tamisage de la poudre ainsi obtenue
- chauffage d'au moins une surface de l'objet à recouvrir
- trempage au moins partiellement de l'objet dans ladite composition
- refroidissement à l'air et/ou à l'eau de l'objet ainsi recouvert.

L'invention a également pour objet l'utilisation d'une composition selon l'invention telle que définie précédemment, pour la fabrication d'objets ayant un aspect métallique stable au cours du temps et en particulier pour améliorer la résistance au crayonnage de ces objets. L'invention a notamment pour objet l'utilisation d'une composition selon l'invention pour la fabrication de revêtements, de peintures, de compositions anticorrosion, de matériaux composites multicouches, d'objets obtenus par des technologies d'agglomération de poudre par fusion ou frittage provoqué par un rayonnement électromagnétique, d'emballages, de jouets, de textiles, de composants de décoration, de l'automobile, de l'aéronautique, de l'électroménager et/ou de l'électronique.

L'invention a également pour objet un article manufacturé ayant au moins une partie superficielle d'aspect métallique stable au cours du temps et de résistance au crayonnage améliorée, ladite partie superficielle étant obtenue par fusion d'au moins une couche de poudre de composition telle que définie précédemment.

Avantageusement, ledit article comprend un revêtement obtenu à partir d'une poudre de composition selon l'invention.

La présente invention a également pour objet un panier de lave-vaisselle comprenant un revêtement obtenu à partir d'une poudre de composition selon l'invention, telle que définie précédemment.

### Description détaillée

La composition selon l'invention sert à fabriquer des objets selon un procédé d'agglomération couche par couche de poudre, et sert notamment à recouvrir et/ou protéger toute sorte d'objets, notamment métalliques, tels que ceux en aluminium, en alliages d'aluminium, en acier et ses alliages, etc. L'invention est particulièrement utile pour les articles en fil métallique, par exemple les paniers métalliques de lave-vaisselle. La composition de l'invention, sous la forme d'un revêtement, peut également recouvrir des objets non métalliques, comme le bois, le plastique ou la céramique.

La composition de l'invention comporte une substance polymère de base, notamment thermoplastique, qui se présente généralement sous forme de poudre, ainsi que des pigments à effets, tels que des nacres. La composition selon l'invention peut comprendre en outre une quantité de pigments métalliques qui ne dépasse par 0,3% de la masse totale de la composition, et/ ou des matières colorantes classiques telles que des pigments classiques monochromatiques.

### I- POLYMERES

A titre d'exemples de polymères appropriés pour la composition de l'invention, on peut citer les polyamides (homopolyamides et copolyamides), les polyoléfines, les époxy et polyesters, les hybrides epoxy/polyether, les polyuréthanes.

Par polyamide (homopolyamide ou copolyamide abrégé CoPA), on entend les produits de polymérisation ou condensation d'un même monomère (cas des homopolyamides) ou de plusieurs monomères différents (cas des CoPA) choisis parmi :
- les monomères de type aminoacides ou acides aminocarboxyliques, et de préférence les acides alpha,oméga-aminocarboxyliques;
- les monomères de type lactames ayant entre 3 à 18 atomes de carbone sur le cycle principal et pouvant être substitués ;
- les monomères de type « diamine.diacide » issus de la réaction entre une diamine aliphatique ayant entre 4 et 18 atomes de carbone et un diacide carboxylique ayant entre 4 et 18 atomes de carbone; et
- leurs mélanges, avec des monomères à nombres de carbones différents dans le cas de copolyamides formés par mélange entre un monomère de type aminoacide et un monomère de type lactame.

Le terme « monomère » dans la présente description des copolyamides doit être pris au sens d' «unité répétitive». En effet, le cas où une unité répétitive du PA est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à polymériser.

Monomères de type aminoacides :
A titre d'exemples d'alpha,oméga-aminoacides, on peut citer ceux ayant de 4 à 18 atomes de carbone, tels que les acides aminocaproïque, amino-7-heptanoïque, amino-11-undécanoïque, n-heptyl-11-aminoundécanoïque et amino-12-dodécanoïque.

Monomères de type lactames :
A titre d'exemples de lactames, on peut citer ceux ayant de 3 à 18 atomes de carbone sur le cycle principal et pouvant être substitués. On peut citer par exemple le b,b-diméthylpropriolactame, le a,a-diméthylpropriolactame, l'amylolactame, le caprolactame aussi appelé lactame 6, le capryllactame aussi appelé lactame 8, l'oenantholactame, le 2-pyrrolidone et le lauryllactame aussi appelé lactame 12.

Monomères de type « diamine.diacide » :
A titre d'exemples d'acide dicarboxylique, on peut citer les acides ayant entre 4 et 18 atomes de carbone de carbone. On peut citer par exemple, l'acide adipique, l'acide sébacique, l'acide azélaique, l'acide subérique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH2)10-COOH.

A titre d'exemple de diamine, on peut citer les diamines aliphatiques ayant de 4 à 18 atomes, pouvant être aryliques et/ou cycliques saturées. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM), la méthaxylyènediamine, le bis-p aminocyclohexylméthane et la triméthylhexaméthylène diamine.

A titre d'exemples de monomères de type « diamine.diacide », on peut citer ceux résultant de la condensation de l'hexaméthylène diamine avec un diacide C6 à C36, notamment les monomères : 6.6, 6.10, 6.11, 6.12, 6.14, 6.18. On peut citer les monomères résultant de la condensation de la décanediamine avec un diacide C6 à C36, notamment les monomères : 10.10, 10.12, 10.14, 10.18 ; ou résultant de la condensation de la décanediamine avec un acide téréphtalique, c'est-à-dire le monomère 10.T.

A titre d'exemples de copolyamides formés à partir des différents types de monomères décrits ci-dessus, on peut citer les copolyamides résultant de la condensation d'au moins deux acides alpha oméga aminocarboxyliques ou de deux lactames ou d'un lactame et d'un acide alpha,oméga-aminocarboxylique. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et d'au moins un autre monomère choisi parmi les diamines aliphatiques différentes de la précédente et les diacides aliphatiques différents du précédent.

A titre d'exemples de copolyamides, on peut citer des copolymères de caprolactame et de lauryllactame (PA 6/12), des copolymères de caprolactame, d'hexaméthylène diamine et d'acide adipique (PA 6/6.6), des copolymères de caprolactame, de lauryllactame, d'hexaméthylène diamine et d'acide adipique (PA 6/12/6.6), des copolymères de caprolactame, d'hexaméthylène diamine et d'acide azélaïque, d'acide amino 11 undécanoïque, et de lauryllactame, (PA 6/6.9/11/12), des copolymères de caprolactame, d'acide adipique et d'hexaméthylène diamine, d'acide amino-11-undécanoïque, de lauryllactame (PA 6/6.6/11/12), des copolymères d'hexaméthylène diamine, d'acide azélaïque, et de lauryllactame (PA 6.9/12), des copolymères de 2-pyrrolidone et de caprolactame (PA 4/6), des copolymères de 2-pyrrolidone et de lauryllactame (PA 4/12), des copolymères de caprolactame et d'acide amino 11 undécanoïque (PA 6/11), des copolymères de lauryllactame et de capryllactame (PA 12/8), des copolymères d'acide amino 11 undécanoïque et de 2-pyrrolidone (PA11/4), des copolymères de capryllactame et de caprolactame (PA 8/6), des copolymères de capryllactame et de 2-pyrrolidone (PA 8/4), des copolymères de lauryllactame et de capryllactame (PA 12/8), des copolymères de Lauryllactame et d'acide amino-11-undécanoïque (PA 12/11).

Ledit polyamide utilisé selon l'invention est choisi parmi : le polyamide 11 et le polyamide 12, ainsi que les polyamides et copolyamides utilisant notamment des monomères 6.10, 6.12, 6.14, 6.18,10.10 et 10.12.

Bien que, conformément à un mode de réalisation préféré de l'invention, la présente invention soit généralement décrite dans la suite du texte en référence à une poudre de PA 11 (qui a l'avantage supplémentaire d'être d'origine renouvelable), la présente invention ne se limite évidemment pas aux poudres de PA 11. La présente invention inclut toute poudre de PA (homopolyamide ou copolyamide) choisi parmi les polyamides : PA 11, PA 12, PA 6.10, PA 6.12, PA 6.14, PA 6.18, PA 10.10, PA 10.12, les copolyamides, et leurs mélanges,
et dans laquelle les particules sont de granulométrie comprise entre 5 et 1000 µm, de préférence de l'ordre de 40 et 160 µm.

A titre d'exemple de grades polyamides disponibles dans le commerce et particulièrement appropriés pour la présente invention, on peut citer des produits de la marque Rilsan® à base de PA 11 de la Société Arkema tels que : Rilsan® T silver 9103, Rilsan® T silver 9108.

Les diamètres de particules préférés sont sensiblement proches de 100µm (diamètre médian d50).

On entend par polyoléfines des polymères comprenant des motifs oléfines tels que par exemple des motifs éthylène, propylène, butène-1, etc... A titre d'exemples, on peut citer :
- Le polyéthylène, le propylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- Les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hémiesters, leurs anhydrides, (iv) les époxydes insaturés. Ces copolymères de l'éthylène pouvant être greffés par des anhydrides d'acides dicarboxyliques insaturés ou des époxydes insaturés.

### II- PIGMENTS

Un pigment est une matière colorante et/ou apportant un aspect «métallique» ou «irisé», se présentant sous forme d'une poudre (colorée, blanche ou noire), et insoluble, contrairement aux « colorants » proprement dits, dans les solvants et les substrats.

### Les pigments à effet

Une composition selon l'invention comprend au moins un pigment à effet choisi parmi les pigments diffractants, les pigments interférentiels, tels que les nacres, les pigments réfléchissants et leurs mélanges.

Par pigment à effet, on entend tout matériau à effet optique spécifique. Cet effet est différent d'un simple effet de teinte conventionnel, c'est-à-dire unifié et stabilisé tel que produit par les matières colorantes classiques comme par exemple les pigments monochromatiques. Au sens de l'invention, «stabilisé» signifie dénué d'effet de variabilité de la couleur avec l'angle d'observation ou encore en réponse à un changement de température. Par exemple, ce matériau peut être choisi parmi les particules à reflet métallique, les agents de coloration goniochromatiques, les pigments diffractants, les agents thermochromes, les agents azurants optiques, ainsi que les fibres, notamment interférentielles. Bien entendu, ces différents matériaux peuvent être associés de manière à procurer la manifestation simultanée de deux effets, voire d'un nouvel effet conforme à l'invention.

Les pigments à effet pouvant entrer dans la composition de l'invention sont choisis de préférence parmi les pigments diffractants, les pigments interférentiels, les pigments réfléchissants et leurs mélanges. Ils sont présents dans la composition selon l'invention en une teneur allant de 0,1 à 5% en masse, et mieux de 0.1 à 1% en masse par rapport à la masse totale de la composition.

En particulier, ledit au moins un pigment à effet est présent selon une teneur supérieure ou égale à 0.1% en masse, de préférence supérieure ou égale à 0,2% en masse, mieux sensiblement égale à 0.3% en masse, par rapport à la masse totale de la composition.

### 1- PIGMENT INTERFERENTIEL

L'expression « pigment interférentiel » désigne un pigment capable de produire une couleur par un phénomène d'interférences, par exemple entre la lumière réfléchie par une pluralité de couches superposées d'indices de réfraction différents, notamment une succession de couches de haut et de bas indices de réfraction.

Un pigment interférentiel peut par exemple comporter plus de quatre couches d'indices de réfraction différents.

Les couches du pigment interférentiel peuvent entourer ou non un noyau, lequel peut présenter une forme aplatie ou non.

Les nacres sont des exemples de pigments interférentiels

### Nacres

Par « nacre », il faut comprendre des particules colorées de toute forme, irisées ou non, notamment produites par certains mollusques dans leur coquille ou bien synthétisées et qui présentent un effet de couleur par interférence optique.
Comme exemples de nacres, on peut citer les pigments nacrés tels que le mica titane recouvert avec un oxyde de fer, le mica recouvert d'oxychlorure de bismuth, le mica titane recouvert avec de l'oxyde de chrome, le mica titane recouvert avec un colorant organique notamment du type précité ainsi que les pigments nacrés à base d'oxychlorure de bismuth. Il peut également s'agir de particules de mica à la surface desquelles sont superposées au moins deux couches successives d'oxydes métalliques et/ou de matières colorantes organiques.

Parmi les nacres disponibles sur le marché, on peut citer les nacres commercialisées par la société BASF, par la société MERCK, par la société ECKART, et par la société ENGELHARD.
Les nacres peuvent plus particulièrement posséder une couleur ou un reflet jaune, rose, rouge, bronze, orangé, brun, gris, argent, cuivré, métallisé et/ou moiré.
A titre illustratif des nacres pouvant être introduites en tant que pigment interférentiel dans la composition de l'invention, on peut citer les nacres de couleur or notamment commercialisées par la société ENGELHARD sous le nom de Brillant gold 212G (Timica), Gold 222C (Cloisonne), Sparkle gold (Timica), Gold 4504 (Chromalite) et Monarch gold 233X (Cloisonne) ; les nacres bronzes notamment commercialisées par la société MERCK sous la dénomination Bronze fine (17384) (Colorona) et Bronze (17353) (Colorona) et par la société ENGELHARD sous la dénomination Super bronze (Cloisonne) ; les nacres oranges notamment commercialisées par la société ENGELHARD sous la dénomination Orange 363C (Cloisonne) et Orange MCR 101 (Cosmica) et par la société MERCK sous la dénomination Passion orange (Colorona) et Matte orange (17449) (Microna) ; les nacres de teinte brune notamment commercialisées par la société ENGELHARD sous la dénomination Nu-antique copper 340XB (Cloisonne) et Brown CL4509 (Chromalite) ; les nacres à reflet cuivre notamment commercialisées par la société ENGELHARD sous la dénomination Copper 340A (Timica) ; les nacres à reflet rouge notamment commercialisées par la société MERCK sous la dénomination Sienna fine (17386) (Colorona) ; les nacres à reflet jaune notamment commercialisées par la société ENGELHARD sous la dénomination Yellow (4502) (Chromalite) ; les nacres de teinte rouge à reflet or notamment commercialisées par la société ENGELHARD sous la dénomination Sunstone G012 (Gemtone) ; les nacres roses notamment commercialisées par la société ENGELHARD sous la dénomination Tan opale G005 (Gemtone) ; les nacres noires à reflet or notamment commercialisées par la société ENGELHARD sous la dénomination Nu antique bronze 240 AB (Timica), les nacres bleues notamment commercialisées par la société MERCK sous la dénomination Matte blue (17433) (Microna), les nacres blanches à reflet argenté notamment commercialisées par la société MERCK sous la dénomination Xirona Silver et les nacres orangées rosées vert doré notamment commercialisées par la société MERCK sous la dénomination Indian summer (Xirona) et leurs mélanges.
On utilise de préférence une matière colorante choisie parmi les nacres, en particulier les micas recouverts d'au moins une couche d'oxyde métallique.

### Particules réfléchissantes interférentielles

Ces particules peuvent être choisies parmi les particules à substrat synthétique enrobé au moins partiellement d'au moins une couche d'au moins un oxyde métallique, choisi par exemple parmi les oxydes de titane, notamment TiO₂, de fer notamment Fe₂O₃, d'étain, de chrome, le sulfate de baryum et les matériaux suivants : MgF2, CrF3, ZnS, ZnSe, SiO₂, Al₂O₃, MgO, Y₂O₃, SeO₃, SiO, HfO₂, ZrO₂, CeO₂, Nb₂O₅, Ta₂O₅, MoS₂ et leurs mélanges ou alliages.

A titre d'exemple de telles particules, on peut citer les particules comportant un substrat de mica synthétique revêtu de dioxyde de titane ou les particules de verre enrobé soit d'oxyde de fer brun, d'oxyde de titane, d'oxyde d'étain ou d'un de leurs mélanges comme celles vendues sous la marque REFLECKS® par la société ENGELHARD.

### Pigment goniochromatique

Par « pigment goniochromatique », on désigne au sens de la présente invention un pigment permettant d'obtenir, lorsque la composition est étalée sur un support, un trajet de couleur dans le plan a*b* de l'espace colorimétrique CIE 1976 qui correspond à une variation Dh° de l'angle de teinte h° d'au moins 20° lorsque l'on fait varier l'angle d'observation par rapport à la normale entre 0° et 80°, pour un angle d'incidence de la lumière de 45°.

Le trajet de couleur peut être mesuré par exemple au moyen d'un spectrogonioréflectomètre de marque INSTRUMENT SYSTEMS et de référence GON 360 GONIOMETER, après que la première composition a été étalée à l'état fluide avec une épaisseur de 300 µm au moyen d'un étaleur automatique sur une carte de contraste de marque ERICHSEN et de référence Typ 24/5, la mesure étant effectuée sur le fond noir de la carte.

Le pigment goniochromatique peut être choisi par exemple parmi les structures multicouches interférentielles et les agents de coloration à cristaux liquides.

Dans le cas d'une structure multicouche, celle-ci peut comporter par exemple au moins deux couches, chaque couche étant réalisée par exemple à partir d'au moins un matériau choisi dans le groupe constitué par les matériaux suivants : MgF₂, CeF₃, ZnS, ZnSe, Si, SiO₂, Ge, Te, Fe₂O₃, Pt, Va, Al₂O₃, MgO, Y₂O₃, S₂O₃, SiO, HfO₂, ZrO₂, CeO₂, Nb₂O₅, Ta₂O5, TiO₂, Ag, Al, Au, Cu, Rb, Ti, Ta, W, Zn, MoS₂, cryolithe, alliages, polymères et leurs associations. La structure multicouche peut présenter ou non, par rapport à une couche centrale, une symétrie au niveau de la nature chimique des couches empilées. Selon l'épaisseur et la nature des différentes couches, on obtient différents effets.

Des exemples de structures multicouches interférentielles symétriques sont par exemple les structures suivantes : Fe₂O₃ /SiO₂ /Fe₂O₃ /SiO₂ /Fe₂O₃, un pigment ayant cette structure étant commercialisé sous la dénomination SICOPEARL par la société BASF ; MoS₂ /SiO₂ /mica-oxyde/SiO₂ /MoS₂ ; Fe₂O₃ /SiO₂ /mica-oxyde/SiO₂ /Fe₂O₃ ; TiO₂ /SiO₂ /TiO₂ et TiO₂ /Al₂O₃ /TiO₂ , des pigments ayant ces structures étant commercialisés sous la dénomination XIRONA par la société MERCK (Darmstadt).

Les agents de coloration à cristaux liquides comprennent par exemple des silicones ou des éthers de cellulose sur lesquels sont greffés des groupes mésomorphes. Comme particules goniochromatiques à cristaux liquides, on peut utiliser par exemple celles vendues par la société CHENIX ainsi que celles commercialisées sous la dénomination HELICONE ® HC par la société WACKER.

Comme pigment goniochromatique, on peut encore utiliser certaines nacres, des pigments à effets sur substrat synthétique, notamment substrat type alumine, silice, borosilicate, oxyde de fer, aluminium, ou des paillettes interférentielles issues d'un film de polytéréphthalate.

Le matériau peut en outre comporter des fibres goniochromatiques dispersées. De telles fibres pourront présenter une longueur inférieure à 80 µm par exemple.

### 2- PIGMENT DIFFRACTANT

Par « pigment diffractant », on désigne au sens de la présente invention un pigment capable de produire une variation de couleur selon l'angle d'observation lorsqu'éclairé par de la lumière blanche, en raison de la présence d'une structure qui diffracte la lumière. Un tel pigment est encore parfois appelé pigment holographique.

Un pigment diffractant peut comporter un réseau de diffraction, capable par exemple de diffracter dans des directions définies un rayon de lumière monochromatique incident.

Le réseau de diffraction peut comporter un motif périodique, notamment une ligne, la distance entre deux motifs adjacents étant du même ordre de grandeur que la longueur d'onde de la lumière incidente.

Lorsque la lumière incidente est polychromatique, le réseau de diffraction va séparer les différentes composantes spectrales de la lumière et produire un effet arc-en-ciel.

On pourra utilement se reporter concernant la structure des pigments diffractants à l'article « Pigments Exhibiting Diffractive Effects » d'Alberto Argoitia and Matt Witzman, 2002, Society of Vacuum coaters, 45 th Annual Technical Conference Proceedings 2002.

Le pigment diffractant peut être réalisé avec des motifs ayant différents profils, notamment triangulaires, symétriques ou non, en créneaux, de largeur constante ou non, sinusoïdaux, en escalier.

La fréquence spatiale du réseau et la profondeur des motifs seront choisies en fonction du degré de séparation des différents ordres souhaités. La fréquence peut varier par exemple entre 500 et 3000 lignes par mm.

De préférence, les particules du pigment diffractant présentent chacune une forme aplatie, et notamment sont en forme de plaquette.

Une même particule de pigment peut comporter deux réseaux de diffraction croisés, perpendiculaires ou non, de même linéature ou non.

Le pigment diffractant peut présenter une structure multicouche comportant une couche d'un matériau réfléchissant, recouverte au moins d'un côté d'une couche d'un matériau diélectrique. Ce dernier peut conférer une meilleure rigidité et durabilité au pigment diffractant. Le matériau diélectrique peut alors être choisi par exemple parmi les matériaux suivants : MgF₂, SiO₂, Al₂O₃, AlF₃, CeF₃, LaF₃, NdF₃, SmF₂, BaF₂, CaF₂, LiF et leurs associations.

Le matériau réfléchissant peut être choisi par exemple parmi les métaux et leurs alliages et aussi parmi les matériaux réfléchissants non métalliques. Parmi les métaux pouvant être utilisés, on peut citer Al, Ag, Cu, Au, Pt, Sn, Ti, Pd, Ni, Co, Rd, Nb, Cr, Fe et leurs matériaux, associations, alliages et leur dopage par des terres rares.

Un tel matériau réfléchissant peut, seul, constituer le pigment diffractant qui sera alors monocouche.

En variante, le pigment diffractant peut comporter une structure multicouche comportant un noyau d'un matériau diélectrique recouvert d'une couche réfléchissante au moins d'un côté, voire encapsulant complètement le noyau. Une couche d'un matériau diélectrique peut également recouvrir la ou les couches réfléchissantes. Le matériau diélectrique utilisé est alors de préférence inorganique, et peut être choisi par exemple parmi les fluorures métalliques, les oxydes métalliques, les sulfures métalliques, les nitrures métalliques, les carbures métalliques et leurs associations. Le matériau diélectrique peut être à l'état cristallin, semi-cristallin ou amorphe. Le matériau diélectrique, dans cette configuration, peut par exemple être choisi parmi les matériaux suivants : MgF₂, SiO, SiO₂, Al₂O₃, TiO₂, WO, AIN, BN, B₄C, WC, TiC, TiN, N₄Si₃, ZnS, des particules de verre, des carbones de type diamant et leurs associations.

En variante, le pigment diffractant peut être composé d'un matériau diélectrique ou céramique préformé tel qu'un minéral en lamelle naturelle, par exemple du mica peroskovite ou du talc, ou des lamelles synthétiques formées à partir de verre, d'alumine, de SiO 2 , de carbone, d'un oxyde de fer/mica, de mica recouvert de BN, de BC, de graphite, d'oxychlorure de bismuth, et leurs associations.

A la place d'une couche d'un matériau diélectrique, d'autres matériaux améliorant les propriétés mécaniques peuvent convenir. De tels matériaux peuvent comporter de la silicone, des silicides métalliques, des matériaux semi-conducteurs formés à partir d'éléments des groupes III, IV et V, des métaux ayant une structure cristalline cubique centrée, des compositions ou matériaux de cermet, des verres semi-conducteurs, et leurs associations variées.

Le pigment diffractant utilisé peut notamment être choisi parmi ceux décrits dans la demande de brevet américain

US 2003/0031870 publiée le 13 février 2003.

Un pigment diffractant peut comporter par exemple la structure suivante : MgF₂/Al/MgF₂, un pigment diffractant ayant cette structure étant commercialisé sous la dénomination SPECTRAFLAIR 1400 Pigment Silver par la société FLEX PRODUCTS, ou SPECTRAFLAIR 1400 Pigment Silver FG. La proportion en poids du MgF₂ peut être comprise entre 80 et 95 % du poids total du pigment.

D'autres pigments diffractants sont commercialisés sous les dénominations Metalure® Prismatic par la société ECKART®.

D'autres structures possibles sont Fe/Al/Fe ou AI/Fe/Al.

La dimension du pigment diffractant peut être comprise par exemple entre 5 et 200 µm, mieux entre 5 et 100 µm, par exemple entre 5 et 30 µm. L'épaisseur des particules de pigment diffractant peut être inférieure ou égale à 3 µm, mieux 2 µm, par exemple de l'ordre de 1 µm.

### 3- PIGMENTS OU PARTICULES REFLECHISSANTES

Par « particules réfléchissantes », on désigne des particules dont la taille, la structure, notamment l'épaisseur de la ou des couches qui la constituent et leurs natures physique et chimique, et l'état de surface, leur permettent de réfléchir la lumière incidente. Cette réflexion peut, le cas échéant, posséder une intensité suffisante pour créer à la surface de la composition ou du mélange, lorsque celui-ci est appliqué sur le support à maquiller, des points de surbrillance visibles à l'oeil nu, c'est-à-dire des points plus lumineux qui contrastent avec leur environnement en semblant briller.

Les particules réfléchissantes peuvent être sélectionnées de manière à ne pas altérer significativement l'effet de coloration généré par les agents de coloration qui leur sont associés et plus particulièrement de manière à optimiser cet effet en terme de rendu de couleur. Elles peuvent plus particulièrement posséder une couleur ou un reflet jaune, rose, rouge, bronze, orangé, brun, or, argenté et/ ou cuivré.

Ces particules peuvent présenter des formes variées, notamment être en forme de plaquettes ou globulaires, en particulier sphériques.

Les particules réfléchissantes, quelle que soit leur forme, peuvent présenter une structure multicouche ou non et, dans le cas d'une structure multicouche, par exemple au moins une couche d'épaisseur uniforme, notamment d'un matériau réfléchissant.

Lorsque les particules réfléchissantes ne présentent pas de structure multicouche, elles peuvent être composées par exemple d'oxydes métalliques, notamment des oxydes de titane ou de fer obtenus par synthèse. Lorsque les particules réfléchissantes présentent une structure multicouche, celles-ci peuvent par exemple comporter un substrat naturel ou synthétique, notamment un substrat synthétique au moins partiellement enrobé par au moins une couche d'un matériau réfléchissant notamment d'au moins un métal ou matériau métallique. Le substrat peut être monomatière, multimatériau, organique et/ ou inorganique.

Plus particulièrement, il peut être choisi parmi les verres, les céramiques, le graphite, les oxydes métalliques, les alumines, les silices, les silicates, notamment les aluminosilicates et les borosilicates, le mica synthétique et leurs mélanges, cette liste n'étant pas limitative.

Le matériau réfléchissant peut comporter une couche de métal ou d'un matériau métallique.

Des particules réfléchissantes sont décrites notamment dans les documents JP-A-09188830 , JP-A-10158450 , JP-A-10158541 , JP-A-07258460 et JP-A-05017710.

Toujours à titre d'exemple de particules réfléchissantes comportant un substrat minéral enrobé d'une couche de métal, on peut citer également les particules comportant un substrat de borosilicate enrobé d'argent.

Des particules à substrat de verre revêtu d'argent, en forme de plaquettes, sont vendues sous la dénomination MICROGLASS METASHINE REFSX 2025 PS par la société TOYAL. Des particules à substrat de verre revêtu d'alliage nickel/chrome/molybdène sont vendues sous la dénomination CRYSTAL STAR GF 550, GF 2525 par cette même société.

On peut également utiliser des particules comprenant un substrat métallique tel que l'argent, l'aluminium, le fer, le chrome, le nickel, le molybdène, l'or, le cuivre, le zinc, l'étain, le magnésium, l'acier, le bronze, le titane, ledit substrat étant enrobé d'au moins une couche d'au moins un oxyde métallique tels que l'oxyde de titane, l'oxyde d'aluminium, l'oxyde de fer, l'oxyde de cérium, l'oxyde de chrome, les oxydes de silicium et leurs mélanges.

On peut citer à titre d'exemple les poudres d'aluminium, de bronze ou de cuivre enrobées de SiO2 commercialisées sous la dénomination VISIONAIRE par la société ECKART.

### Pigments métalliques

Le terme de « pigment métallique » recouvre des poudres à base d'aluminium, de magnésium, de cuivre, de fer (acier), de bronze, de titane ou des dérivés micacés, généralement utilisées comme additifs, en particulier des peintures et encres.

Les paramètres physiques influant sur l'aspect « métallique » conféré par lesdits pigments sont les dimensions moyennes des particules constituant la poudre, leur forme, leur distribution et leur orientation dans la formulation finale.

Ils présentent généralement une granulométrie comprise entre 5 et 25 µm et une forme dite en écailles plates ou paillettes ou encore en micro-lamelles et sont subdivisés en deux types, selon leur comportement au mouillage dans les solvants :
- Les pigments pelliculants (ou leafing) qui restent en surface de la formulation et s'orientent parallèlement aux interfaces en formant une couche métallique dense ce qui confère au milieu un pouvoir réflecteur très élevé et une excellente protection.
- Les pigments non-pelliculants qui s'orientent plus ou moins parallèlement au substrat, de manière aléatoire et dans le bas de couche de la préparation.

La composition selon l'invention comprend des pigments métalliques, pelliculants, de type aluminium préférentiellement, et à condition que leur teneur dans la composition ne dépasse pas 0,3% en masse sur la masse totale de la composition.

A titre d'exemple de pigments métalliques pouvant être utilisés dans la composition de la présente invention, on peut citer ceux de la Société Eckart-Werke : Chromal® X (poudres d'aluminium pelliculant, traitées en surface par de l'acide stéarique et de diamètre moyen 9 µm), ou Chromai® XV (poudres d'aluminium pelliculant).

### Pigments classiques monochromatiques:

Selon un mode de réalisation préféré de l'invention, les compositions de revêtement comprennent en outre des pigments classiques, tels que ceux couramment utilisés dans les peintures et revêtements de l'art antérieur. Ces pigments sont responsables de la couleur et de l'opacité du revêtement. Ce sont des solides pulvérulents, de granulométrie très fine (généralement inférieure à 1 µm), minéraux ou organique bien connus de l'homme du métier. A titre d'exemples, on peut citer le dioxyde de titane, l'oxyde de zinc, le noir de carbone, les oxydes de fer, les ferrocyanures ferriques de potassium, de sodium, le vert oxyde de chrome, les chromophores, les auxochromes, les azoïque, les phtalocyanines... Ces pigments très courants ne sont donc pas décrits davantage.

### III- CHARGES

Les charges se présentent sous la forme de matières solides minérales ou organiques et pulvérulentes. Elles améliorent certaines propriétés rhéologiques ou physiques telles que la dureté du film de revêtement, son imperméabilité ou sa résistance à la corrosion. Elles peuvent encore conférer de l'uniformité et/ou de la matité au film.

Ces poudres, de granulométrie supérieure à 1 µm, ne présentent pas ou peu de pouvoir opacifiant, et peu de pouvoir colorant.

Les charges utilisées dans les compositions selon la présente invention peuvent être de formes lamellaires, globulaires, sphériques, de fibres ou de toute autre forme intermédiaire entre ces formes définies.

Les charges selon l'invention peuvent être ou non enrobées superficiellement, et en particulier elles peuvent être traitées en surface par des silicones, des acides aminés, des dérivés fluorés ou toute autre substance favorisant la dispersion et la compatibilité de la charge dans la composition. Parmi les charges minérales utilisables dans les compositions selon l'invention, on peut citer les oxydes (silices, quartz, silice amorphe, diatomées, etc), les silicates (talc, mica, kaolin, bentonite, silicate de calcium, le siloxysilicate de triméthyle, etc), les carbonates (carbonate de calcium, carbonate et hydrogénocarbonate de magnésium, dolomie, etc), les sulfates (barytine, blanc fixe), l'hydroxyapatite, le nitrure de bore, les microsphères de silice creuses (Silica Beads de Maprecos), les microcapsules de verre ou de céramique ; les composites de silice et de dioxyde de titane comme la série TSG commercialisée par Nippon Sheet Glass, et leurs mélanges.

Une charge peut être présente dans une composition conforme à l'invention à raison d'environ 1 à environ 40 %.

Une charge convenant à l'invention peut être par exemple une charge dont la granulométrie moyenne est inférieure à 100 µm, notamment comprise dans la gamme allant de 1 à 50 µm, de préférence de 4 à 20 µm.

### IV- ADDITIFS

Une composition selon l'invention peut comprendre en outre toutes sortes d'additifs et adjuvants usuellement utilisés dans le domaine des revêtements. Il peut s'agir d'additifs qui confèrent certaines propriétés spécifiques à la poudre et/ou au film de revêtement, telles que l'aptitude à la fluidité, la coulabilité, etc. A titre d'exemple, les additifs peuvent être choisis parmi les agents filmogènes, et le cas échéant les auxiliaires de filmification, les gommes, les polymères semi-cristallins, les agents antioxydants, les agents anticorrosion, les conservateurs, des agents protecteurs contre les UV, et leurs mélanges.

Tout type d'additif contribuant à améliorer les propriétés de la poudre pour son utilisation en technologie d'agglomération peut également être utilisé. On peut citer en outre des pigments pour l'absorption infra rouge, du noir de carbone, des charges minérales pour diminuer les contraintes internes et des additifs anti-feu. On peut aussi rajouter des additifs permettant d'améliorer les propriétés mécaniques (contrainte à la rupture et allongement à la rupture) des pièces obtenues par fusion de poudre comprenant une composition selon l'invention. Ces charges sont par exemple des fibres de verre, des fibres de carbone, des nano-charges, des nano-argiles et des nano-tubes de carbone. L'introduction de ces charges au moment de la synthèse permet d'améliorer leur dispersion et leur efficacité.

Il relève des opérations de routine de l'homme de l'art d'ajuster la nature et la quantité des additifs et/ou des charges présent(e)s dans les compositions conformes à l'invention, de telle sorte que les propriétés esthétiques et les propriétés de viscosité désirées de ces dernières n'en soient pas affectées.

La présente invention est illustrée à l'aide des exemples de compositions préférées ci-après. Ces exemples ne constituent en aucun cas une limitation de la présente invention.

### MELANGE DES INGREDIENTS POUR FABRIQUER LA COMPOSITION

De manière avantageuse, le mélange des différents ingrédients, notamment des pigments et la substance polymère de base, pour obtenir la composition de l'invention, est effectué par mélange à sec, ou « dry blend ». Dans les exemples décrits dans la présente demande, on utilise un mélangeur Henschel, dont la vitesse de rotation est ajustée par l'opérateur. Bien entendu, tout autre type de mélangeur pourrait être utilisé, tel que par exemple un mélangeur MAGIMIX.

Dans le cas de la réalisation des poudres destinées à être appliquées par "Trempage", le mélange s'effectue de préférence à une vitesse de rotation de l'ordre de 600 à 1200 tr.min⁻¹, de préférence sensiblement égale à 900 tr.min tr.min⁻¹, pendant une durée de 60 à 120 secondes, de préférence sensiblement égale à 100 secondes.

Dans le cas de la réalisation des poudres destinées à être appliquées par pulvérisation "Electrostatique", le mélange s'effectue de préférence à une vitesse de rotation de l'ordre de 1500 à 2200 tr.min⁻¹, de préférence sensiblement égale de 1800 tr.min-1, pendant une durée de 100 secondes.

Les poudres sont ensuite tamisées sur un tamis de toile de 355 µm.

Le diamètre moyen des particules de poudre de la composition selon l'invention est avantageusement compris entre 10 µm et 1 mm.

### PROCEDE DE REVETEMENT/FABRICATION D'OBJET

Lors du procédé de revêtement selon l'invention, par trempage en lit fluidisé par exemple, l'objet est recouvert dans le lit d'une mince couche de poudre. L'épaisseur de la mince couche de poudre peut aller jusqu'à 2 mm, elle est avantageusement comprise entre 0,1 et 0,6 mm. L'objet peut être éventuellement soumis à un chauffage ou cuisson. La poudre fond, filmifie et forme le revêtement.

Bien entendu le dispositif de trempage en lit fluidisé n'est donné qu'à titre d'exemple et tout autre dispositif de fabrication au moins partielle d'un objet par agglomération d'au moins une couche de poudre par fusion, ou de revêtement d'un objet par un film, tel que la pulvérisation ou le poudrage électrostatique, pourrait également être employé dans le procédé de l'invention. Le procédé selon l'invention inclut notamment les technologies d'agglomération de poudre par fusion ou frittage provoqué par un rayonnement tel que par exemple un faisceau laser (laser sintering), un rayonnement infra rouge ou un rayonnement UV ou toute source de rayonnement électromagnétique permettant de faire fondre la poudre pour fabriquer des objets, une partie d'objet et/ou leur revêtement.

Les revêtements des exemples décrits ci-après sont appliqués par trempage sur des plaquettes acier de 100x50x3mm.

Les conditions d'application comprennent :
- un chauffage des plaquettes pendant 10 min à 330°C, suivi
- de leur trempage pendant 4 secondes, puis de
- leur refroidissement à l'air et/ou à l'eau (après 1 minute 20 secondes).
Le type de refroidissement a un impact sur la dispersion des pigments à la surface de l'objet et dans l'épaisseur du film de revêtement. Le fait de tremper l'objet revêtu dans l'eau fige la structure et empêche le développement de sphérolites de grande taille, tandis que le refroidissement à l'air entraîne des structures cristallines qui peuvent croître.

L'aspect de surface est plus brillant si le refroidissement est fait à l'eau.

Toutefois, sur l'ensemble des plaques refroidies à l'eau (après 1 minute 20 secondes) les tests de metal marking montrent que le crayonnage est plus important que pour les plaques refroidies à l'air. Pour le procédé selon l'invention, le mode de refroidissement préférentiel est donc effectué à l'air.

### TEST DE RESISTANCE AU CRAYONNAGE OU TEST FEUTRE

Pour évaluer le crayonnage, on utilise le test feutre qui permet de mesurer et de classifier la résistance aux frottements des différentes surfaces ou revêtements par abrasion. Ce mode opératoire s'applique à tous les revêtements et surfaces métalliques.

### Principe :

Le test consiste à frotter un revêtement ou partie superficielle d'objet en polyamide (par exemple polyamide 11) avec un feutre ou un tampon de feutrine sec. Le feutre réalise des allers-retours réguliers, sous une pression constante, jusqu'à dégradation apparente de la surface (revêtement/partie superficielle de l'objet.

### Appareillage :

Dans la profession, ce test est souvent pratiqué à la main avec un morceau de papier.

Le dispositif utilisé ici est issu de l'industrie du cuir. Il est appelée USOMETRE. Il est fournie par la société EMI. Son automatisation (40 allers-retours par minute) assure une meilleure reproductibilité dans les essais.

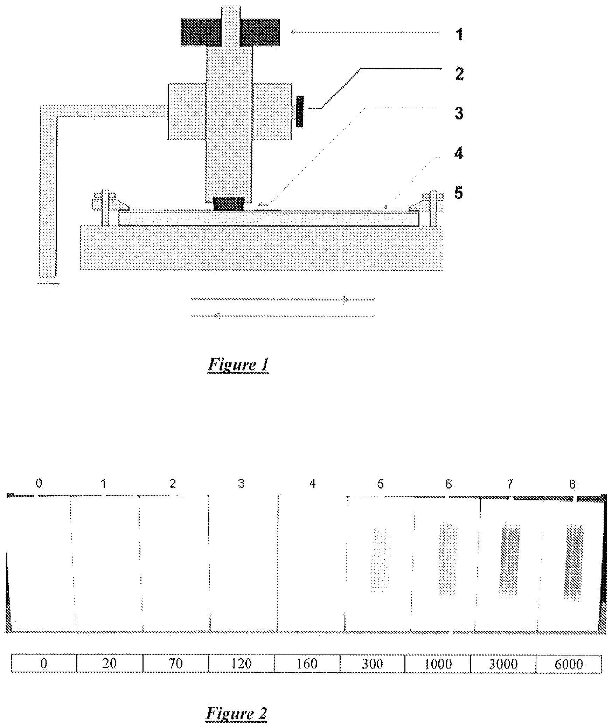

La figure 1 représente ce dispositif de test de résistance au crayonnage utilisé dans les exemples.

Les feutres ou tampons de feutrine (indiqués par le chiffre 3 sur la figure 1) utilisés sont des carrés de 15 x 15 mm de feutre blanc normalisé, de référence VESLIC - C4500/IUF450, art Nr.701 (provenance : Allemagne).

### Mode opératoire :

Un revêtement est préparé dans les conditions d'application définies précédemment, en faisant attention notamment aux conditions de séchage/refroidissement et de conditionnement préalable.

La surface du film obtenu doit être exempte de tout défaut pouvant initier une dégradation anormale et avancée lors du test (pas de poussières, ni d'agglomérats, etc...).

Environ 24h après l'application du revêtement, la plaque avec revêtement (référencée 4 sur la figure 1) est placée sur la machine et bloquée par deux mâchoires latérales 5.

On place un poids 1 de 1 kg sur une colonne "porte-feutre", fixée par une molette de serrage 2. Dans le cas des exemples, la colonne pèse 0,5 kg et la molette de serrage de la colonne pèse 0,5 kg.

Pour fixer le feutre, la colonne est libérée par desserrage de la molette (2) appropriée.

Un feutre 3 est fixé sous la colonne, puis la colonne est resserrée, de sorte que le feutre touche le revêtement 4 à tester.

Après avoir vérifié que le compteur est bien à zéro, on lance les allers-retours en commutant l'interrupteur marche/arrêt.

On arrête l'essai lorsque 1000 ou 3000 cycles sont effectués.

### A) Echelle de référence

Essai sur un grade à teneur élevée en pigment aluminium (supérieure à 0.3%), très sensible au metal marking. Un nombre de cycles croissant (0 à 6000 cycles) est appliqué et à chaque niveau de metal marking est associé une notation entre 0 et 8.
0=0cycle= parfait pas de metal marking
8=6000 cycles= très fort metal marking

La figure 2 représente cette échelle de référence qui attribue une note à chaque niveau de metal marking.

| Niveau de Metal Marking | 0 | 1 | 2 | 3 | 4 | 5 | 6 | 7 | 8 |
|---|---|---|---|---|---|---|---|---|---|
| Nombre de cycles | 0 | 20 | 70 | 120 | 160 | 300 | 1000 | 3000 | 6000 |

Dans les exemples de la présente demande, différents grades sont testés à 1000 et 3000 cycles et sont classés selon cette notation.

### B) Tests de crayonnage :

Les formulations testées dans les différents essais et exemples de la demande utilisent un ou plusieurs des ingrédients suivants :

### Pigments à effets :

- Iriodin 119 (de la société Merck) : pigments à effets formés par des paillettes de mica enrobées de TiO2, avec une taille de particules pouvant aller de 10 à 60 µm ;
- Iriodin 120 (de la société Merck) : pigments à effets formés par des paillettes de mica enrobées de TiO₂, avec une taille de particules pouvant aller de 5 à 20 µm ;
- PX 2001, PX 1320: nacres de la société Eckart

### Pigments monochromatiques classiques:

Noir (PK 3097), blanc (Oxide de zinc), Titane RHD2, Rouge oxyde de fer 130, Jaune lumière 6R.

### Pigments métalliques :

Aluminium non pelliculant :
- Sillux 501 (de la société Eckart): paillettes d'aluminium non pelliculant à double enrobage : silice (SiO2) et organique, et de diamètre moyen 20 µm ;
- PCR 212 (Eckart) : pigments brillants formés par des paillettes d'aluminium non pelliculant enrobées de silice (SiO2) et de diamètre moyen 48 µm ;
- Alu 21326/A (Eckart): paillette d'aluminium non pelliculant, enrobées de silice.

Aluminium pelliculant :
- Chromal X (de la société Eckart-Werke): poudres d'aluminium pelliculant, traitées en surface par de l'acide stéarique et de diamètre moyen 9 µm ;
- Chromal XV (de la société Eckart-Werke): poudres d'aluminium pelliculant, d'aspect inox.

### Additifs :

Irganox 1098: antioxydant couramment utilisé dans les compositions de revêtements thermoplastiques. Sa formule chimique est : N,N'-hexane-1,6-dihylbis(3-(3,5-di-tert-butyl-4-hydroxyphenylpropionamide.

Le tableau 1 suivant montre les résultats des tests de résistance au crayonnage (metal marking) pour des revêtements réalisés à partir de différentes formulations à base de polyamide 11 de viscosité relative en solution comprise dans la gamme allant de 0,9 à 1,2 (viscosité mesurée à 25% en masse en solution dans du méta crésol).

Pour chaque essai, seuls les pigments utilisés et leur teneur (en pourcentage) dans le polyamide 11 sont donc précisés dans le tableau 1 (colonne « Formulation »).

Les résultats des tests feutre (niveaux de metal marking MM entre 0 et 8) après 1000 et 3000 cycles sont indiqués dans les colonnes correspondantes du tableau 1.

**Tableau 1**

| Essai n° | Formulation | Niveau de MM (de 1 à 8) après : | |
|---|---|---|---|
| | | 1000 cycles | 3000 cycles |
| 1 | 0,16% Sillux 501 | Important (gris) | Très important (noir) 8 |
| | 0,24% Iriodin 119 | 5 | |
| | 0.025% Pigment noir | | |
| | 0,21% Irganox 1098 | | |
| 2 | 0,3% Sillux501 | Important (gris-noir) 6 | Très important (noir) 7 |
| | 0,5% Iriodin119 | | |
| | 0,15% Pigment noir | | |
| | 0,13% Irganox 1098 | | |
| 3 | 0,18% Sillux 501 | Important (gris noir) 5 | Important (gris noir) 6 |
| | 0,14% PCR212 | | |
| | 0,48% Iriodin 119 | | |
| 4 | 0,1% Alu21326 | Important (gris) 4 | Important (gris noir) 5 |
| | 0,06% PCR 212 | | |
| | 0.07% Pigment noir | | |
| | 0,24% Iriodin 119 | | |
| 5 | 0,15% PCR212 | Important (gris) 5 | Très important (noir) 7 |
| | 0,22% Iriodin119 | | |
| | 0,15% Pigment Noir | | |
| 6 | 0,5% Alu21326 10µm | Important (noir) 5 | Très important (noir) 7 |
| | 0,1% Iriodin 120 | | |
| | 0,13% Irganox 1098 | | |
| 7 | 0,12% Pigment noir | 0 | 0 |
| 8 | 0,04% Pigment noir | 0 | 0 |
| | 0,3% Irganox | | |
| 9 | 0,46% Pigment noir | 0 | Légère trace noire 1 |
| | 0,55% Iriodin 120 | | |
| 10 | 0,45% Chromal X | léger (gris) 2 | Très important (noir) 8 |
| | 0,3% Iriodin 119 | | |
| 11 Exemple selon l'invention | 0,2% Chromal XV | Pas de Metal Marking | 0 |
| | 0,3% Iriodin 119 | | |
| | 0,13% Irganox 1098 | | |
| | 0,12% Pigment noir | | |

### C) Conclusion

Les grades sans aluminium et sans nacres n'ont pas de metal marking : essais 7 et 8.

Les grades avec des pigments aluminium non pelliculants (sillux 501/ PCR 212) marquent beaucoup : essais n°1 à 6.

Les formulations avec une quantité d'aluminium pelliculant (type Chromal) supérieure à 0,3% marquent beaucoup : essai n°10

Les formulations sans pigment métallique aluminium (exemple comparatif : essai n° 9) marquent peu. Celles avec peu d'aluminium pelliculant (teneur inférieure ou égale à 0,3% en masse sur la masse totale de la formulation) type Chromal ne marquent pas : exemple/essai n°11 selon l'invention. Cette dernière formulation selon l'invention donne de très bons résultats de résistance au crayonnage : on n'observe pas de metal marking même après 3000 cycles au test feutre.

Ces exemples montrent que l'utilisation de nacres et la limitation du taux de pigments aluminium pelliculants dans les compositions de revêtement selon l'invention permettent d'obtenir un revêtement d'aspect métallique stable à long terme et résistant au crayonnage.

Pour les formules selon l'invention (exemple 11), on n'observe pas de cloquage, pas d'autres défauts de surface ni de perte de teinte.

### Essais 12 à 27 :

Des formulations sont réalisées avec les pigments aluminium pelliculant (Chromal X, Chromal XV), et non pelliculant (Sillux 501, Alu 21326/A) suivant la même formulation mais avec des taux d'aluminium différents (0,3% ; 0,6% et 0,9%).

Le polymère de base utilisé pour toutes les formulations 12 à 27 est du polyamide 11 (PA 11) de viscosité relative sensiblement égale à 0.95 (mesure à 0,25 % massique en solution dans le métacrésol).

**Tableau 2 (Comparatifs)**

| | 12 | 13 | 14 |
|---|---|---|---|
| PA 11 | qsp 100 | qsp 100 | qsp 100 |
| Eau | 0,3 | 0,3 | 0,3 |
| Oxyde de zinc | 0,15 | 0,15 | 0,15 |
| Titane RHD2 | 0,15 | 0,15 | 0,15 |
| Rouge oxyde de fer 130 | 0.01 | 0,01 | 0.01 |
| Jaune lumière 6R | 0,03 | 0,03 | 0,03 |
| Alu Sillux 501 | 0,3 | 0,6 | 0,9 |

Les exemples comparatifs 15, 16, 17 reprennent les mêmes formules en remplaçant l'Alu Sillux 501 par l'Alu 21326/A; les exemples comparatifs 18, 19, 20 le remplacent par l'Alu Chromal X ; et les exemples comparatifs 21, 22, 23 le remplacent par l'Alu Chromal XV.

Les revêtements sont appliqués par trempage sur des plaquettes 100*50*3mm Conditions d'applications :
Chauffage des plaques en acier : 10min à 330°C, puis 4 secondes de trempage, suivi du refroidissement à l'air et à l'eau après 1min20.

Les formulations des essais 24 à 27 du tableau 3 ci-dessous comprennent en outre 0.3% en masse d'un pigment à effet (Iriodin 119).

**Tableau 3**

| Essai n° : | Cp 24 | Ex 25 | Ex 26 | Cp 27 |
|---|---|---|---|---|
| PA 11 | qsp 100 | qsp 100 | qsp 100 | qsp 100 |
| Eau | 0,3 | 0,3 | 0,3 | 0,3 |
| Oxyde de zinc | 0,15 | 0,15 | 0,15 | 0,15 |
| Iriodin 119 | 0,3 | 0,3 | 0,3 | 0,3 |
| Sillux 501 | 0,3 | - | - | - |
| Alu 21326/A | - | 0,3 | - | - |
| Chromal X | - | - | 0,3 | - |
| Chromal XV | - | - | - | 0,3 |

Les tableaux 4 et 5 (essais 14 à 27) ci-dessous indiquent pour différentes teneurs en pigments métalliques et/ou à effets, les résultats des tests de metal marking, selon que le refroidissement du revêtement a été effectué à l'air ou bien à l'eau.

L'aspect du revêtement obtenu à partir de ces compositions est évalué par un panel d'experts expérimentés :
- L'aspect métallique est noté sur une échelle de 1 à 10, la note 1 correspondant à l'aspect métallique le plus faible et la note 10 à l'aspect métallique le plus fort.
- Le nombre d'yeux de poissons est compté (après refroidissement à l'eau ou à l'air).

Ces essais confirment que le metal marking est plus important sur les plaques refroidies à l'eau qu'à l'air.

On observe que les défauts de surface tels que les yeux de poisson sont plus importants sur les revêtements comprenant de l'aluminium non pelliculant. La comparaison des tableaux 4 et 5 montre que le metal marking est beaucoup plus important sur les pigments non pelliculants que sur les pigments pelliculants.

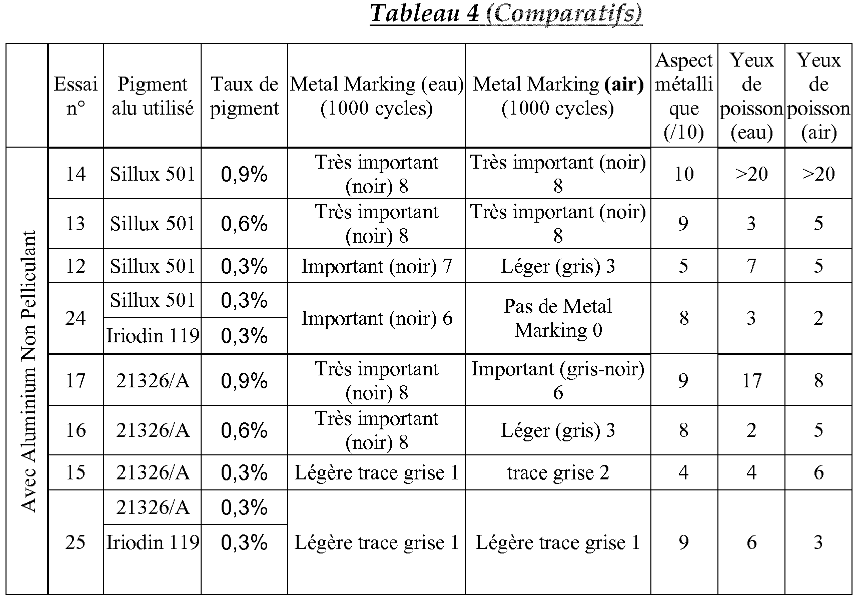

L'ajout de pigments à effet (Iriodin), permet de diminuer le metal marking et les défauts de revêtement (yeux de poisson) des formulations comprenant de l'aluminium non pelliculant.

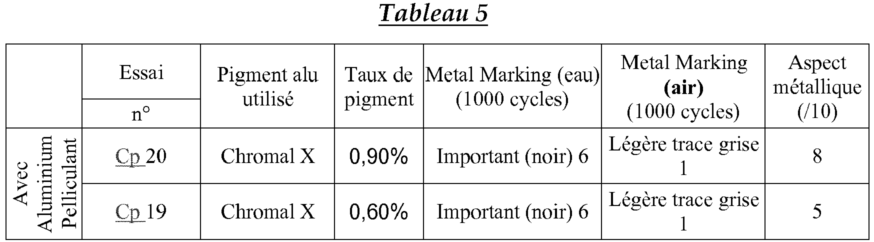

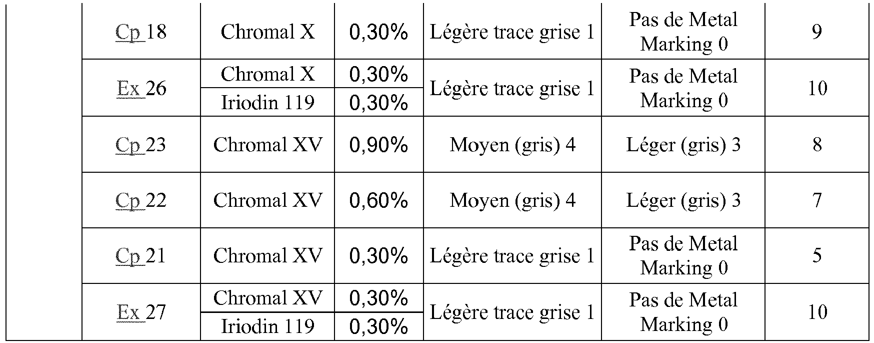

Quel que soit le type d'aluminium des formules, l'utilisation de pigments à effet, combinée à l'utilisation d'une teneur limitée en pigments aluminium (inférieure ou égale à 0,3%), permet d'augmenter l'aspect métallique tout en n'ayant pas de metal marking, même à long terme (exemples 26 et 27 selon l'invention).

Observation de l'aspect de surface au microscope (optique ou MEB) :
On observe en surface des plaques une dispersion différente des pigments pelliculants et non pelliculants. Les particules des pigments non pelliculants sont plus grosses et donnent un effet plus pailleté. Les pigments pelliculants sont dispersés à la surface sous forme d'un grand nombre de petites particules, ils créent un effet miroir et une surface plus homogène.

### Exemples de formulations selon l'invention :

La formulation 28 utilise à la fois des nacres (PX 2001 et PX 1320) et un pigment aluminium pelliculant (chromal XV) :

| Formulation 28 | |
|---|---|
| PA 11 | qsp 100 |
| Visco 0.95 | |
| eau | 0,3 |
| Oxyde de zinc | 0,15 |
| Irganox 1098 | 0,15 |
| Chromal XV | 0,1 |
| PX 2001 | 1 |
| PX 1320 | 0,2 |

La formulation 29 (sans pigment aluminium) utilise à la fois des nacres (Iriodine 500, 502, 511) et une teneur en pigments (noir) plus importante :

| Formulation 29 | |
|---|---|
| PA 11 | qsp 100 |
| Visco 0.95 | |
| eau | 0,3 |
| Oxyde de zinc | 0,15 |
| Iriodine 502 | 0,014 |
| Iriodine 500 | 0,045 |
| Noir PK 3097 | 0,11 |
| Iriodine 111 | 0,15 |

| Formulation n° | Revêtement obtenu | | | | |
|---|---|---|---|---|---|
| | Piqûres | Yeux de poisson | Tests metal marking | | Aspect métallique stable ? |
| | | | 1000 cycles | 3000 cycles | |
| 28 | 6/18 (eau) | - | Très léger 1 | Très léger 1 | oui |
| | 7/18 (air) | | | | |
| 29 | | - | Très léger 1 | Très léger 1 | oui |
| | 1/18 (air) | | | | |

Les revêtements obtenus selon le procédé d'application décrit précédemment, à partir des formulations 28 et 29 selon l'invention :
- recouvrent parfaitement les arêtes,
- n'ont pas ou très peu de piqûres (mode d'évaluation : examen du nombre d'intersections présentant le défaut : nombre de piqûres/18 intersections), et
- aucun phénomène de yeux de poisson n'est observé (mode d'évaluation : yeux de poissons dénombrés lorsque leur taille est significative, diamètre supérieur à 0,5 mm environ).

Les tests feutre effectués sur ces revêtements montrent qu'ils sont très résistants au metal marking. Ces revêtements selon l'invention ont un aspect métallique stable au cours du temps, après 1000, 3000 cycles et plus.

## Revendications

1. Composition pulvérulente pour la fabrication d'objets ayant un aspect métallique qui ne change pas au cours du temps et résistant au crayonnage, ladite composition comprenant, sur la masse totale de la composition :
- de 50 à 99,9% en masse d'au moins un polymère thermoplastique comprenant du polyamide,
- de 0,1 à 5% en masse d'au moins un pigment à effet optique,
- au moins un pigment métallique pelliculant, dont la quantitié ne dépasse par 0,3% de la masse totale de la composition,
ladite composition pouvant comprendre en outre jusqu'à 49,9% d'un ou plusieurs autre(s) composant(s) choisi(s) parmi des polymères autres que thermoplastiques, des charges, des additifs, des pigments classiques monochromatiques ou tout autre matériau envisageable dans une telle composition pulvérulente,
ledit polyamide étant choisi parmi les polyamides : PA 11, PA 12, PA 6.10, PA 6.12, PA 6.14, PA 6.18, PA 10.10, PA 10.12, les copolyamides, et leurs mélanges.

2. Composition selon la revendication 1, dans laquelle ledit au moins un pigment à effet est choisi parmi les pigments diffractants, les pigments interférentiels, les pigments réfléchissants et leurs mélanges.

3. Composition selon l'une des revendications précédentes, dans laquelle les pigments diffractants sont choisis parmi :
- les pigments monocouche comprenant un matériau réfléchissant choisi parmi les métaux et leurs alliages,
- les pigments présentant une structure multicouche comportant une couche d'un matériau réfléchissant choisi parmi les métaux et leurs alliages et aussi parmi les matériaux réfléchissants non métalliques, recouverte au moins d'un côté d'une couche d'un matériau diélectrique.
- les pigments composés d'un matériau diélectrique ou céramique préformé tel qu'un minéral en lamelle naturelle ou des lamelles synthétiques, et leurs mélanges.

4. Composition selon l'une des revendications précédentes, dans laquelle les pigments interférentiels sont choisis parmi les nacres, les particules réfléchissantes interférentielles, les pigments goniochromatiques et leurs mélanges.

5. Composition selon la revendication 4, dans laquelle les pigments goniochromatiques sont choisis parmi les structures multicouches interférentielles et les agents de coloration à cristaux liquides.

6. Composition selon la revendication 4, dans laquelle les nacres sont choisies parmi les pigments nacrés tels que le mica titane recouvert avec un oxyde de fer, le mica recouvert d'oxychlorure de bismuth, le mica titane recouvert avec de l'oxyde de chrome, le mica titane recouvert avec un colorant organique, les pigments nacrés à base d'oxychlorure de bismuth, les particules de mica à la surface desquelles sont superposées au moins deux couches successives d'oxydes métalliques et/ou de matières colorantes organiques et leurs mélanges.

7. Composition selon la revendication 4, dans laquelle les particules réfléchissantes interférentielles sont choisies parmi les particules à substrat synthétique enrobé au moins partiellement d'au moins une couche d'au moins un oxyde métallique.

8. Composition selon l'une des revendications précédentes, dans laquelle les pigments réfléchissants sont choisis parmi :
- les oxydes métalliques, notamment les oxydes de titane ou de fer obtenus par synthèse,
- les structures multicouches comprenant un substrat naturel ou synthétique, au moins partiellement enrobé par au moins une couche d'un matériau réfléchissant notamment d'au moins un métal ou matériau métallique.

9. Composition selon l'une des revendications précédentes, dans laquelle ledit au moins un pigment métallique est choisi parmi : l'aluminium, le cuivre, les alliages du cuivre ou de l'aluminium, et leurs mélanges.

10. Composition selon la revendication 9, dans laquelle l'aluminium est de l'aluminium pelliculant.

11. Composition selon l'une quelconque des revendications précédentes, dans laquelle ledit au moins un polymère est du polyamide 11, ledit au moins un pigment à effet comprend de 0,1 à 1 % en masse de nacres sur la masse totale de la composition, ledit au moins un pigment métallique comprend moins de 0,3% en masse d'Aluminium, de préférence moins de 0,2% en masse d'Aluminium sur la masse totale de la composition.

12. Composition selon l'une quelconque des revendications précédentes, comprenant en outre au moins un additif et/ou au moins une charge et/ ou au moins un pigment monochromatique.

13. Composition selon la revendication 12, dans laquelle ledit au moins un additif est choisi parmi les agents antioxydants, les stabilisants thermiques, les agents anticorrosion, les agents d'amélioration de la fluidité, de la coulabilité, les agents filmogènes, les auxiliaires de filmification, les gommes, les polymères semi-cristallins, les conservateurs, les agents protecteurs contre les UV, et leurs mélanges.

14. Composition selon la revendication 12, dans laquelle ladite au moins une charge est choisie parmi les oxydes, silices, quartz, silice amorphe, diatomées ; les silicates, talc, mica, kaolin, bentonite, silicate de calcium, le siloxysilicate de triméthyle ; les carbonates, carbonate de calcium, carbonate de magnesium, hydrogénocarbonate de magnésium, dolomie ; les sulfates ; l'hydroxyapatite, le nitrure de bore, les microsphères de silice creuses ; les microcapsules de verre ou de céramique ; les composites de silice et de dioxyde de titane, et leurs mélanges.

15. Revêtement d'aspect métallique stable au cours du temps et résistant au crayonnage, ledit revêtement étant issu de la fusion d'au moins une couche de poudre de composition conforme à l'une des revendications 1 à 14.

16. Procédé de fabrication d'au moins une partie superficielle d'un objet par agglomération de poudre par fusion, ladite poudre comprenant une composition conforme à l'une des revendications 1 à 14.

17. Procédé selon la revendication 16, dans lequel l'agglomération de poudre par fusion est provoquée par un rayonnement électromagnétique, tel qu'un faisceau laser, un rayonnement infra rouge ou un rayonnement UV.

18. Procédé selon la revendication 16, dans lequel ladite partie superficielle de l'objet comprend au moins un revêtement formé par agglomération de poudre de composition conforme à l'une des revendications 1 à 14, ledit revêtement ayant un aspect métallique stable au cours du temps et étant résistant au crayonnage, ledit procédé comprenant au moins les étapes suivantes:
- mélange des composants de ladite composition, de préférence à une vitesse de rotation comprise dans la gamme allant de 500 à 3000 tr.min⁻¹
- tamisage de la poudre ainsi obtenue
- chauffage d'au moins une surface de l'objet à recouvrir
- trempage au moins partiellement de l'objet dans ladite composition
- refroidissement à l'air et/ou à l'eau de l'objet ainsi recouvert.

19. Utilisation d'une composition selon l'une quelconque des revendications 1 à 14, pour la fabrication de revêtements, de peintures, de compositions anticorrosion, de matériaux composites multicouches, d'objets obtenus par des technologies d'agglomération de poudre par fusion ou frittage provoqué par un rayonnement électromagnétique, d'emballages, de jouets, de textiles, de composants de décoration, de l'automobile, de l'aéronautique, de l'électroménager et/ou de l'électronique.

20. Article manufacturé ayant au moins une partie superficielle d'aspect métallique stable au cours du temps et résistant au crayonnage, ladite partie superficielle étant obtenue par fusion d'au moins une couche de poudre de composition conforme à l'une des revendications 1 à 14.

21. Article manufacturé selon la revendication 20, comprenant un revêtement obtenu à partir d'une poudre de composition conforme à l'une des revendications 1 à 14.

22. Panier de lave-vaisselle comprenant un revêtement obtenu à partir d'une poudre de composition conforme à l'une des revendications 1 à 14.

## Patentansprüche

1. Pulverförmige Zusammensetzung zur Herstellung von Gegenständen mit einem metallischen Erscheinungsbild, das sich im Laufe der Zeit nicht ändert, und mit zeichnerischer Beständigkeit, wobei die Zusammensetzung bezogen auf die Gesamtmasse der Zusammensetzung Folgendes umfasst:
- 50 bis 99,9 Ma% von mindestens einem thermoplastischen Polymer, umfassend Polyamid,
- 0,1 bis 5 Ma% von mindestens einem Pigment mit optischem Effekt,
- mindestens ein Leafing-Metallpigment, dessen Menge 0,3 % der Gesamtmasse der Zusammensetzung nicht überschreitet,
wobei die Zusammensetzung ferner bis zu 49,9 % von einer anderen Komponente oder von mehreren anderen Komponenten umfassen kann, die aus anderen Polymeren als thermoplastischen Polymeren, Füllstoffen, Zusatzstoffen, herkömmlichen monochromatischen Pigmenten oder jedem anderen denkbaren Material in einer solchen pulverförmigen Zusammensetzung ausgewählt ist (sind),
wobei das Polyamid ausgewählt ist aus den Polyamiden: PA 11, PA 12, PA 6.10, PA 6.12, PA 6.14, PA 6.18, PA 10.10, PA 10.12, den Copolyamiden und Mischungen davon.

2. Zusammensetzung nach Anspruch 1, wobei mindestens ein Effektpigment aus den diffraktiven Pigmenten, den Interferenzpigmenten, den reflektierenden Pigmenten und Mischungen davon ausgewählt ist.

3. Zusammensetzung nach einem der vorhergehenden Ansprüche, wobei die diffraktiven Pigmente ausgewählt sind aus:
- den einschichtigen Pigmenten, umfassend ein reflektierendes Material, das aus den Metallen und ihren Legierungen ausgewählt ist,
- wobei die Pigmente eine mehrschichtige Struktur aufweisen, die eine Schicht eines reflektierenden Materials umfasst, das aus den Metallen und ihren Legierungen und auch aus den nicht metallischen reflektierenden Materialien ausgewählt ist, die mindestens auf einer Seite mit einer Schicht aus einem dielektrischem Material bedeckt ist,
- den Pigmenten, die aus einem vorgeformten dielektrischen oder keramischen Material bestehen, wie ein Mineral aus natürlichen Lamellen oder synthetische Lamellen und ihre Mischungen.

4. Zusammensetzung nach einem der vorhergehenden Ansprüche, wobei die Interferenzpigmente aus den Perlglanzpigmenten, den reflektierenden Interferenzpartikeln, den goniochromatischen Pigmenten und ihren Mischungen ausgewählt sind.

5. Zusammensetzung nach Anspruch 4, wobei die goniochromatischen Pigmente aus den mehrschichtigen Interferenzstrukturen und den Flüssigkristallfarbstoffen ausgewählt sind.

6. Zusammensetzung nach Anspruch 4, wobei die Perlglanzpigmente ausgewählt sind aus Perlglanzpigmenten, wie mit Eisenoxid beschichtetem Titanglimmer, mit Bismutoxychlorid beschichtetem Glimmer, Titanglimmer, der mit Chromoxid beschichtet ist, Titanglimmer, der mit einem organischen Farbstoff beschichtet ist, Perlglanzpigmente auf der Basis von Bismutoxychlorid, Glimmerteilchen, auf deren Oberfläche mindestens zwei aufeinanderfolgende Schichten aus Metalloxiden und/oder organischen Farbstoffen und Mischungen davon überlagert sind.

7. Zusammensetzung nach Anspruch 4, wobei die reflektierenden Interferenzpartikel ausgewählt sind aus den Teilchen aus synthetischem Substrat, das mindestens teilweise mit mindestens einer Schicht aus mindestens einem Metalloxid umhüllt ist.

8. Zusammensetzung nach einem der vorhergehenden Ansprüche, wobei die reflektierenden Pigmente ausgewählt sind aus:
- den Metalloxiden, insbesondere den Titan- oder Eisenoxiden, die durch Synthese erhalten sind,
- wobei die Mehrschichtstrukturen ein natürliches oder synthetisches Substrat umfassen, das mindestens teilweise mit mindestens einer Schicht eines reflektierenden Materials, insbesondere aus mindestens einem Metall oder metallischem Material, umhüllt ist.

9. Zusammensetzung nach einem der vorhergehenden Ansprüche, wobei das mindestens eine Metallpigment ausgewählt ist aus: Aluminium, Kupfer, Kupferlegierungen oder Aluminium und Mischungen davon.

10. Zusammensetzung nach Anspruch 9, wobei das Aluminium Leafing-Aluminium ist.

11. Zusammensetzung nach einem der vorhergehenden Ansprüche, wobei das mindestens eine Polymer Polyamid 11 ist, das mindestens eine Effektpigment 0,1 bis 1 Massenprozent Perlglanzpigmente bezogen auf die Gesamtmasse der Zusammensetzung umfasst, das mindestens eine Metallpigment weniger als 0,3 Massenprozent Aluminium, vorzugsweise weniger als 0,2 Massenprozent Aluminium bezogen auf die Gesamtmasse der Zusammensetzung umfasst.

12. Zusammensetzung nach einem der vorhergehenden Ansprüche, ferner umfassend mindestens einen Zusatzstoff und/oder mindestens einen Füllstoff und/oder mindestens ein monochromatisches Pigment.

13. Zusammensetzung nach Anspruch 12, wobei der mindestens eine Zusatzstoff ausgewählt ist aus den Antioxidantien, den Wärmestabilisatoren, den Antikorrosionsmitteln, den Mitteln zur Verbesserung des Fließvermögens, der Fließfähigkeit, den Filmbildungsmitteln, den Hilfsstoffen für die Filmbildung, den Gummis, den halbkristallinen Polymeren, den Konservierungsmitteln, den UV-Schutzmitteln und Mischungen davon.

14. Zusammensetzung nach Anspruch 12, wobei der mindestens eine Füllstoff ausgewählt ist aus Oxiden, Kieselerden, Quarz, amorphem Siliciumdioxid, Diatomeen; Silikaten, Talkum, Glimmer, Kaolin, Bentonit, Calciumsilicat, Trimethylsiloxysilicat; Carbonaten, Calciumcarbonat, Magnesiumcarbonat, Magnesiumhydrogencarbonat, Dolomit; Sulfaten; Hydroxyapatit, Bornitrid, den hohlen Siliziumdioxid-Mikrokugeln; den Glas- oder Keramik-Mikrokapseln; Verbindungen aus Kieselerde und Titandioxid und Mischungen davon.

15. Beschichtung mit durchweg stabilem metallischen Erscheinungsbild und mit zeichnerischer Beständigkeit, wobei die Beschichtung aus dem Schmelzen von mindestens einer Pulverschicht der Zusammensetzung nach einem der Ansprüche 1 bis 14 hervorgegangen ist.

16. Verfahren zur Herstellung von mindestens einem Oberflächenteil eines Gegenstands durch Agglomerieren des Pulvers durch Schmelzen, wobei das Pulver eine Zusammensetzung nach einem der Ansprüche 1 bis 14 umfasst.

17. Verfahren nach Anspruch 16, wobei das Agglomerieren des Pulvers durch Schmelzen durch eine elektromagnetische Strahlung, wie ein Laserstrahl, eine Infrarotstrahlung oder eine UV-Strahlung bewirkt wird.

18. Verfahren nach Anspruch 16, wobei der Oberflächenteil des Gegenstands mindestens eine Beschichtung aufweist, die durch Agglomerieren des Pulvers der Zusammensetzung nach einem der Ansprüche 1 bis 14 gebildet ist, wobei die Beschichtung ein durchweg stabiles metallisches Erscheinungsbild und zeichnerische Beständigkeit aufweist, wobei das Verfahren mindestens die folgenden Schritte aufweist:
- Mischen der Komponenten der Zusammensetzung, vorzugsweise mit einer Drehzahl innerhalb des Bereiches von 500 bis 3.000 UpM
- Sieben des auf diese Weise erhaltenen Pulvers
- Heizen von mindestens einer Oberfläche des zu bedeckenden Gegenstands
- mindestens teilweises Eintauchen des Gegenstands in die Zusammensetzung
- Abkühlen des auf diese Weise bedeckten Gegenstands an der Luft und/oder im Wasser.

19. Verwendung von einer Zusammensetzung nach einem der Ansprüche 1 bis 14 zur Herstellung von Beschichtungen, von Lacken, von Korrosionsschutzzusammensetzungen, von Mehrschichtverbundwerkstoffen, von Gegenständen, die durch Technologien des Agglomerierens von Pulver durch Schmelzen oder Sintern erhalten werden, das durch eine elektromagnetische Strahlung bewirkt wird, von Verpackungen, von Spielzeugen, von Textilien, von Dekorationskomponenten, des Automobils, der Luftfahrt, der Elektrogeräte und/oder der Elektronik.

20. Fertigungsgegenstand, der mindestens einen Oberflächenteil mit durchweg stabilem metallischen Erscheinungsbild und mit zeichnerischer Beständigkeit aufweist, wobei der Oberflächenteil durch Schmelzen von mindestens einer Pulverschicht der Zusammensetzung nach einem der Ansprüche 1 bis 14 erhalten wird.

21. Fertigungsgegenstand nach Anspruch 20, umfassend eine Beschichtung, die aus einem Pulver einer Zusammensetzung nach einem der Ansprüche 1 bis 14 erhalten ist.

22. Geschirrspülerkorb, umfassend eine Beschichtung, die aus einem Pulver einer Zusammensetzung nach einem der Ansprüche 1 bis 14 erhalten ist.

## Claims

1. Pulverulent composition for the manufacture of articles with a metallic appearance that does not change over time and is resistant to metal marking, said composition comprising, relative to the total mass of the composition:
- from 50% to 99.9% by mass of at least one thermoplastic polymer comprising polyamide,
- from 0.1% to 5% by mass of at least one pigment with an optical effect,
- at least one leafing metallic pigment, the quantity of which does not exceed 0.3% of the total mass of the composition,
said composition also possibly comprising upto 49.9% of one or more other components chosen from polymers other than thermoplastics, fillers, additives, conventional monochromatic pigments or any other material that may be envisaged in such a pulverulent composition,
said polyamide being chosen from the polyamides: PA 11, PA 12, PA 6.10, PA 6.12, PA 6.14, PA 6.18, PA 10.10, PA 10.12, copolyamides, and mixtures thereof.

2. Composition according to Claim 1, in which said at least one pigment with an effect is chosen from diffractive pigments, interference pigments and reflective pigments, and mixtures thereof.

3. Composition according to either of the preceding claims, in which the diffractive pigments are chosen from:
- monolayer pigments comprising a reflective material chosen from metals and alloys thereof,
- pigments with a multilayer structure comprising a layer of a reflective material chosen from metals and alloys thereof, and also from non-metallic reflective materials, covered on at least one side with a layer of a dielectric material,
- pigments composed of a preformed dielectric or ceramic material, such as a natural lamellar mineral or synthetic lamellae, and mixtures thereof.

4. Composition according to one of the preceding claims, in which the interference pigments are chosen from nacres, reflective interference particles and goniochromatic pigments, and mixtures thereof.

5. Composition according to Claim 4, in which the goniochromatic pigments are chosen from multilayer interference structures and liquid-crystal coloring agents.

6. Composition according to Claim 4, in which the nacres are chosen from nacreous pigments such as titanium mica coated with an iron oxide, mica coated with bismuth oxychloride, titanium mica coated with chromium oxide, titanium mica coated with an organic dye, nacreous pigments based on bismuth oxychloride, mica particles at the surface of which are superposed at least two successive layers of metal oxides and/or of organic dyestuffs, and mixtures thereof.

7. Composition according to Claim 4, in which the reflective interference particles are chosen from particles containing a synthetic substrate coated at least partially with at least one layer of at least one metal oxide.

8. Composition according to one of the preceding claims, in which the reflective pigments are chosen from:
- metal oxides, especially titanium or iron oxides obtained by synthesis,
- multilayer structures comprising a natural or synthetic substrate, at least partially coated with at least one layer of a reflective material, especially of at least one metal or metallic material.

9. Composition according to one of the preceding claims, in which said at least one metallic pigment is chosen from: aluminum, copper, copper or aluminum alloys, and mixtures thereof.

10. Composition according to Claim 9, in which the aluminum is leafing aluminum.

11. Composition according to any one of the preceding claims, in which said at least one polymer is polyamide 11, said at least one pigment with an effect comprises from 0.1% to 1% by mass of nacres relative to the total mass of the composition, said at least one metallic pigment comprises less than 0.3% by mass of aluminum and preferably less than 0.2% by mass of aluminum relative to the total mass of the composition.

12. Composition according to any one of the preceding claims, also comprising at least one additive and/or at least one filler and/or at least one monochromatic pigment.

13. Composition according to Claim 12, in which said at least one additive is chosen from antioxidants, heat stabilizers, anticorrosion agents, fluidity or flowability enhancers, film-forming agents, film-forming auxiliaries, gums, semicrystalline polymers, preserving agents and UV stabilizers, and mixtures thereof.

14. Composition according to Claim 12, in which said at least one filler is chosen from oxides, silicas, quartz, amorphous silica, diatomaceous earths; silicates, talc, mica, kaolin, bentonite, calcium silicate, trimethyl siloxysilicate; carbonates, calcium carbonate, magnesium carbonate, magnesium hydrogen carbonate, dolomite; sulfates; hydroxyapatite, boron nitride, hollow silica microspheres; glass or ceramic microcapsules; composites of silica and of titanium dioxide, and mixtures thereof.

15. Coating with a metallic appearance that is stable over time and that is resistant to metal marking, said coating being derived from the melting of at least one coat of powder composition according to one of Claims 1 to 14.

16. Process for manufacturing at least a surface part of an article by powder melt-aggregation, said powder comprising a composition according to one of Claims 1 to 14.

17. Process according to Claim 16, in which the powder melt-aggregation is mediated by electromagnetic radiation, such as a laser beam, infrared radiation or UV radiation.

18. Process according to Claim 16, in which said surface part of the article comprises at least one coating formed by aggregation of a powder composition according to one of Claims 1 to 14, said coating having a metallic appearance that is stable over time and that is resistant to metal marking, said process comprising at least the following steps:
- mixing the components of said composition, preferably at a spin speed within the range from 500 to 3000 rpm,
- screening the powder thus obtained,
- heating at least one surface of the article to be covered,
- at least partially dipping the article in said composition,
- cooling the article thus covered in air and/or with water.

19. Use of a composition according to any one of Claims 1 to 14, for the manufacture of coatings, paints, anticorrosion compositions, multilayer composite materials, articles obtained by powder aggregation techniques by melting or sintering mediated by electromagnetic radiation, packagings, toys, textiles, decorative components, motor vehicles, aeronautics, household electrical goods and/or electronics.

20. Manufactured article having at least a surface part with a metallic appearance that is stable over time and resistant to metal marking, said surface part being obtained by melting at least one coat of powder composition according to one of Claims 1 to 14.

21. Manufactured article according to Claim 20, comprising a coating obtained from a powder composition according to one of Claims 1 to 14.

22. Dishwasher basket comprising a coating obtained from a powder composition according to one of Claims 1 to 14.
